# EUROPEAN PATENT APPLICATION

(11) **EP 4 554 066 A1**
(43) Date of publication of application: **14.05.2025**
(21) Application number: 23871963.7
(22) Date of filing: 14.09.2023
(51) Int. Cl.: H02K 9/22, H02K 15/12, H02K 16/02, H02K 49/10

(54) **STATOR AND METHOD FOR MANUFACTURING STATOR**

(30) Priority: 26.09.2022 JP 2022152690
(71) Applicant: Mitsubishi Heavy Industries, Ltd., Tokyo 100-8332 (JP)
(72) Inventor: SHIMONO, Kodai, Tokyo 100-8332 (JP); OKABE, Ryoji, Tokyo 100-8332 (JP); SASAKI, Mikito, Tokyo 100-8332 (JP)
(74) Representative: Studio Torta S.p.A.
(86) International application number: PCT/JP2023/033540
(87) International publication number: WO 2024/070730

(57) **Abstract**

A stator includes: a stator core and a resin member disposed on the stator core. The resin member includes: a filling part which fills a slot opening formed between two circumferentially adjacent teeth and extends in the axial direction; and a lid part having a lid body part which is connected to one end portion of the filling part in the axial direction and extends in the circumferential direction so as to cover coil ends on one side of the stator core in the axial direction. The lid body part has: an inner peripheral surface; an outer peripheral surface; and at least one radial opening portion which connects in the radial direction an inner opening formed in the inner peripheral surface and an outer opening formed in the outer peripheral surface.

## Description

### TECHNICAL FIELD

The present disclosure relates to a stator and a method for producing a stator.

The present application claims priority based on Japanese Patent Application No. 2022-152690 filed on September 26, 2022, the entire content of which is incorporated herein by reference.

### BACKGROUND ART

Magnetic geared electrical machines configured to transmit magnetic torque are known. For example, a magnetic geared electrical machine disclosed in Patent Document 1 includes, in order from the radially inner side, an inner rotor supporting a plurality of permanent magnets, a pole piece rotor including a plurality of pole pieces, and a stator. The stator has a stator core, a stator coil disposed on the stator core, and a plurality of stator magnets disposed on the inner peripheral side of the stator core.

### Citation List

### Patent Literature

Patent Document 1: JP5643857B

### SUMMARY

### Problems to be Solved

The stator temperature rises due to copper loss in the stator coil, for example, so a cooling design for the stator is desirable. However, there is no disclosure of a specific configuration in Patent Document 1.

An object of the present disclosure is to provide a stator with improved cooling performance and a method for producing the stator.

### Solution to the Problems

A stator according to at least one embodiment of the present disclosure includes: a stator core extending in a circumferential direction with respect to an axis; a plurality of teeth protruding from the stator core to one side in a radial direction and arranged at intervals in the circumferential direction; a plurality of stator coils wound around the plurality of teeth, each of the plurality of stator coils including a coil end located on one side of the stator core in an axial direction; and a resin member disposed on the stator core. The resin member includes: a filling part which fills a slot opening formed between two circumferentially adjacent teeth of the plurality of teeth and extends in the axial direction; and a lid part having a lid body part which is connected to one end portion of the filling part in the axial direction and extends in the circumferential direction so as to cover the coil end on the one side of the stator core in the axial direction. The lid body part has: an inner peripheral surface; an outer peripheral surface; and at least one radial opening portion which connects in the radial direction an inner opening formed in the inner peripheral surface and an outer opening formed in the outer peripheral surface.

A method for producing a stator according to an embodiment of the present disclosure is a method for producing the above-described stator, including: a step of placing a mold so as to cover a plurality of the coil ends arranged in the circumferential direction and placing, in a space surrounded by the mold, at least one core to form the at least one radial opening portion on the one side of the stator core in the axial direction; a step of injecting liquid resin into the space surrounded by the mold to form the resin member and filling the slot opening with the liquid resin; a step of drying and curing the resin; and a step of removing the mold and the at least one core.

### Advantageous Effects

The present disclosure provides a stator with improved cooling performance and a method for producing the stator.

### BRIEF DESCRIPTION OF DRAWINGS

FIG. 1A is a schematic view of a magnetic geared electrical machine (magnetic geared generator) according to an embodiment.
FIG. 1B is a schematic view of a magnetic geared electrical machine (magnetic geared motor) according to another embodiment.
FIG. 2 is a schematic view showing an internal structure of a magnetic geared electrical machine according to an embodiment.
FIG. 3A is a schematic view of a resin member according to an embodiment.
FIG. 3B is a schematic view of a resin member according to another embodiment.
FIG. 4A is another schematic view of the resin member according to an embodiment.
FIG. 4B is another schematic view of the resin member according to another embodiment.
FIG. 5 is a flowchart of the method for producing a stator according to an embodiment.
FIG. 6 is a schematic view of a stator core before the start of the stator producing method.
FIG. 7 is a schematic view showing the arrangement of a mold-releasable member in the stator producing method according to an embodiment.
FIG. 8 is a schematic view of a molding mold and at least one core according to an embodiment.
FIG. 9 is a schematic view of a completed stator.
FIG. 10 is a flowchart of the method for producing a stator according to another embodiment.
FIG. 11 is a schematic view showing the arrangement of a plurality of stator magnets in the stator producing method according to another embodiment.
FIG. 12 is a schematic view showing the arrangement of a plurality of auxiliary magnets in the stator producing method according to another embodiment.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same features can be indicated by the same reference numerals and not described in detail.

### < 1. Overview of magnetic geared electrical machine 1>

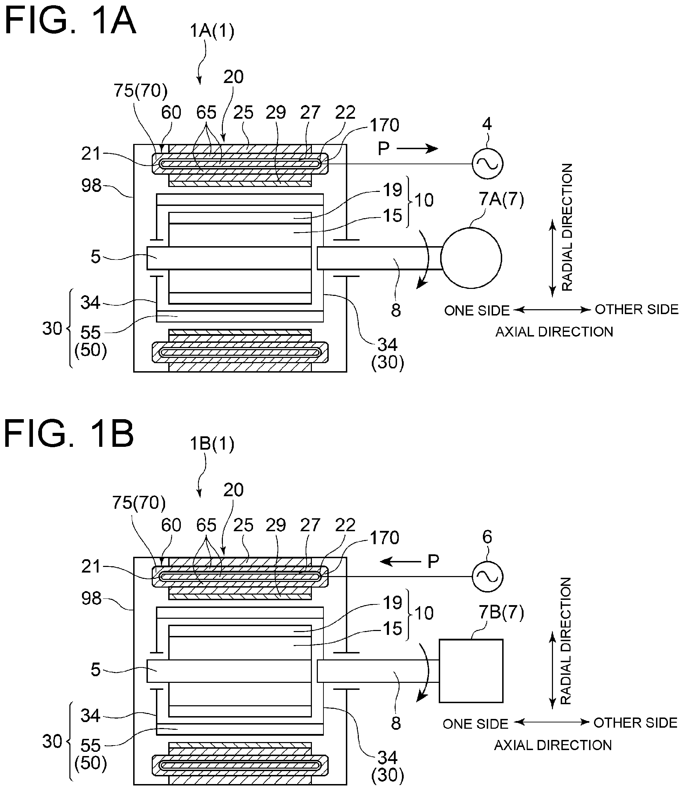

FIGs. 1A and 1B are each a schematic view of a magnetic geared electrical machine 1A, 1B (1) according to some embodiments of the present disclosure. In the following description, "axial direction" or "axially" refers to the direction parallel to the axis of a stator 20 incorporated in the magnetic geared electrical machine 1, "radial direction" or "radially" refers to the radial direction with respect to the axis of the stator 20, and "circumferential direction" or "circumferentially" refers to the circumferential direction with respect to the axis of the stator 20. The magnetic geared electrical machine 1 includes a rotational shaft 5 for transmitting power to and from an external rotating device 7, which will be described below. The axis of the rotational shaft 5 coincides with the axis of the stator 20. The rotational shaft 5 is supported rotatably by a housing 98. The magnetic geared electrical machine 1 is connected to a power transmission shaft 8 of the external rotating device 7. The rotational shaft 5 may be solid, as illustrated in FIGs. 1A and 1B, or may be cylindrical (not shown) to accommodate the power transmission shaft 8.

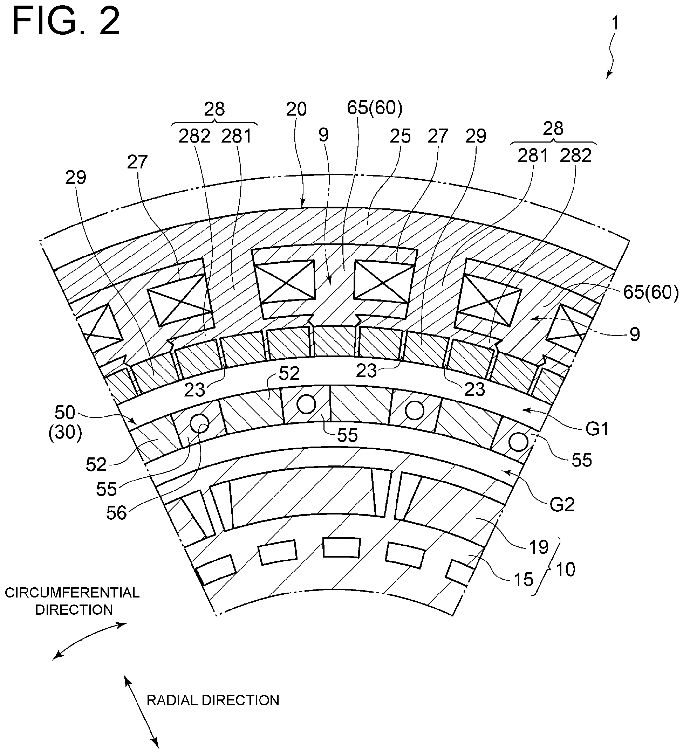

The magnetic geared electrical machine 1 illustrated in FIGs. 1A and 1B includes a magnet rotor 10 and a stator 20. The magnet rotor 10 and the stator 20 are accommodated in the housing 98. The magnet rotor 10 includes a plurality of rotor magnets 19 arranged in the circumferential direction and a rotor core 15 supporting the plurality of rotor magnets 19. The rotor core 15 is connected to the rotational shaft 5. In these figures, the surface permanent magnet (SPM) configuration is used, in which the rotor magnets 19 are provided on the surface of the rotor core 15, but this disclosure is not limited thereto. For example, the interior permanent magnet (IPM) configuration may be used, in which the rotor magnets 19 are provided inside the rotor core 15 (see FIG. 2).

The stator 20, which is fixed to the housing 98, includes a plurality of stator magnets 29 arranged in the circumferential direction, a stator core 25 supporting the plurality of stator magnets 29, a thermosetting resin member 60 disposed on the stator core 25, and a plurality of stator coils 27 embedded in the resin member 60. The resin member 60 has the function of improving the cooling performance of the stator 20 (details are described below). Each stator coil 27, which is wound around the stator core 25 and embedded in the resin member 60, has a coil end 21 on one side of the stator core 25 in the axial direction and another coil end 22 on the other side. In the stator 20 shown in the figures, the SPM configuration is used, in which the stator magnets 29 are provided on the surface of the stator core 25, but this disclosure is not limited thereto, and the IPM configuration may be used.

The magnetic geared electrical machine 1 of FIGs. 1A and 1B further includes a pole piece rotor 30 accommodated in the housing 98. The pole piece rotor 30 includes a plurality of pole pieces 55 arranged in the circumferential direction and a pair of flanges 34 respectively disposed on axially both sides of the plurality of pole pieces 55. The pole pieces 55 illustrated in the figures are disposed radially inward of the stator 20 and radially outward of the magnet rotor 10. The flange 34 on axially one side of the pole pieces 55 is connected to the rotational shaft 5 via a bearing, and the flange 34 on the axially other side is connected to the power transmission shaft 8. This allows the pole piece rotor 30 to rotate integrally with the power transmission shaft 8 and to rotate relative to the rotational shaft 5.

The magnetic geared electrical machine 1A (1) illustrated in FIG. 1A is a magnetic geared generator configured to be driven by input from a prime mover 7A, which is an example of the external rotating device 7, to generate electric power. The stator coil 27 shown in this figure is electrically connected to a power supply destination 4, which may be a power grid. The principle of generating electric power by the magnetic geared electrical machine 1A as a magnetic geared generator is as follows. When the prime mover 7A rotates and drives the power transmission shaft 8, the pole piece rotor 30 rotates. The positional relationship of the plurality of pole pieces 55 relative to the plurality of rotor magnets 19 and the plurality of stator magnets 29 changes, the magnetic flux between the magnet rotor 10 and the stator 20 is modulated, and the magnet rotor 10 rotates as the rotor magnets 19 receive magnetic force from the modulated magnetic field. The electromagnetic induction caused by the rotation of the pole piece rotor 30 and the magnet rotor 10 generates a current in the stator coil 27, so that the magnetic geared electrical machine 1A, as a magnetic geared generator, can supply electric power to the power supply destination 4.

The magnetic geared electrical machine 1 (1B) illustrated in FIG. 1B is a magnetic geared motor configured to drive a rotating machine 7B, which is an example of the external rotating device 7, upon receiving electric power P supplied from a power supply source 6, which may be, for example, a power grid. The rotating machine 7B may be, for example, an electrical vehicle, in which case the power transmission shaft 8 of the rotating machine 7B is the drive shaft of the electrical vehicle. The principle of driving the rotating machine 7B by the magnetic geared electrical machine 1B as a magnetic geared motor is as follows. The magnet rotor 10 rotates by a rotating magnetic field generated by energization of the stator coil 27. The positional relationship of the plurality of pole pieces 55 relative to the plurality of rotor magnets 19 and the plurality of stator magnets 29 changes, the magnetic flux between the magnet rotor 10 and the stator 20 is modulated, the pole piece rotor 30 rotates, and torque is output to the power transmission shaft 8. As a result, the magnetic geared electrical machine 1B as a magnetic geared motor drives the rotating machine 7B.

In the magnetic geared electrical machine 1A, 1B (1) of FIGs. 1A and 1B, NL = NH + NS holds, where NL is the number of magnetic poles of the pole pieces 55 of the pole piece rotor 30, NH is the number of pairs of magnetic poles (pole pairs) of the rotor magnets 19 of the magnet rotor 10, and NS is the number of pairs of magnetic poles (pole pairs) of the stator magnets 29 of the stator 20. If this relationship holds, the ratio of the number of rotations of the magnet rotor 10 to the pole piece rotor 30 is expressed as NL/NH. In this example, NL/NH is greater than 1, meaning that the magnet rotor 10 functions as a high-speed rotor and the pole piece rotor 30 functions as a low-speed rotor. The number of magnetic poles NL of the pole pieces 55 is smaller than the number of pole pairs NS of the stator magnets 29.

In the examples of FIGs. 1A and 1B, the stator 20, the pole pieces 55, and the rotor magnets 19 are arranged in order from the radially outer side, but this disclosure is not limited thereto. For example, the rotor magnets 19, the pole pieces 55, and the stator 20 may be arranged in order from the radially outer side.

### <2. Overview of internal structure of magnetic geared electrical machine 1>

FIG. 2 is a schematic view showing an internal structure of the magnetic geared electrical machine 1 according to an embodiment of the present disclosure. The pole piece rotor 30 includes an annular unit 50 extending in the circumferential direction. The annular unit 50 is opposed to the stator 20 with an outer air gap G1 therebetween, and the annular unit 50 is opposed to the magnet rotor 10 with an inner air gap G2 therebetween. The annular unit 50 has a plurality of pole pieces 55 and a plurality of non-magnetic bodies 52, each pole piece 55 and each non-magnetic body 52 extending in the axial direction. The plurality of pole pieces 55 and the plurality of non-magnetic bodies 52 are arranged alternately with each other in the circumferential direction. In this example, each pole piece 55 is formed from a plurality of axially stacked electromagnetic steel plates, but this disclosure is not limited thereto. For example, at least a part of each pole piece 55 may be formed from a powder magnetic core. The above-described pair of flanges 34 (see FIGs. 1A and 1B) is directly or indirectly connected to axially opposite ends of the annular unit 50, respectively.

Although not an essential component of the present disclosure, the outer peripheral surface of the annular unit 50 may be covered partially or completely by a cover (not shown). Similarly, the inner peripheral surface of the annular unit 50 may be covered partially or completely by a cover (not shown). The material forming the cover is preferably a non-magnetic material, more preferably a non-magnetic and non-conductive material.

Although not an essential component of the present disclosure, at least one of the plurality of pole pieces 55 may include a pole piece air passage 56 which opens in the axial direction. Air flows along the axial direction in the pole piece air passage 56. In this case, each of the pair of flanges 34 should be provided with a ventilation hole that communicates with the pole piece air passage 56.

Although not illustrated in detail, at least one of the plurality of non-magnetic bodies 52 may include a non-magnetic body air passage which opens in the axial direction, and air may flow along the axial direction in this air passage. In this case, each of the pair of flanges 34 should be provided with a ventilation hole that communicates with the non-magnetic body air passage in the axial direction.

### <3. Detailed configuration of stator 20 according to one embodiment>

As illustrated in FIG. 2, the stator core 25, which is a component of the stator 20, extends in the circumferential direction with respect to the axis. Further, the stator 20 includes a plurality of teeth 28 protruding from the stator core 25 to one side in the radial direction (in the example of FIG. 2, the radially inner side). The plurality of teeth 28 are arranged at intervals in the circumferential direction. Each of the teeth 28 extends in the axial direction and has a protruding portion 281 protruding from the stator core 25 to one side in the radial direction and a tip portion 282 disposed at one end of the protruding portion 281. In the circumferential direction, the tip portion 282 is longer than the protruding portion 281. The space between two circumferentially adjacent teeth 28 is a slot opening 9. The above-described stator coil 27 is wound around the protruding portion 281 of each of the plurality of teeth 28, and a part of the stator coil 27 is placed in the slot opening 9.

The stator 20 further includes fingers 23 arranged at intervals in the circumferential direction. The fingers 23 protrude from the tip portions 282 to one side in the radial direction and extend in the axial direction. Each of the plurality of stator magnets 29 has an axially extending shape. Further, each stator magnet 29 is sandwiched by two circumferentially adjacent fingers 23. That is, the plurality of stator magnets 29 are arranged in the circumferential direction on one side in the radial direction relative to the stator core 25. The fingers 23 illustrated in FIG. 2 is formed integrally with the tip portions 282, but this disclosure is not limited thereto. For example, at least one of the plurality of fingers 23 may be formed separately from the tip portions 282.

As described above, the magnetic geared electrical machine 1 may have a configuration in which the rotor magnets 19, the pole pieces 55, and the stator 20 are arranged in order from the radially outer side. In this case, "one side in the radial direction" is the radially outer side. In the following, the configuration in which one side in the radial direction is the radially inner side will be mainly described.

### <4. Configuration of resin member 60>

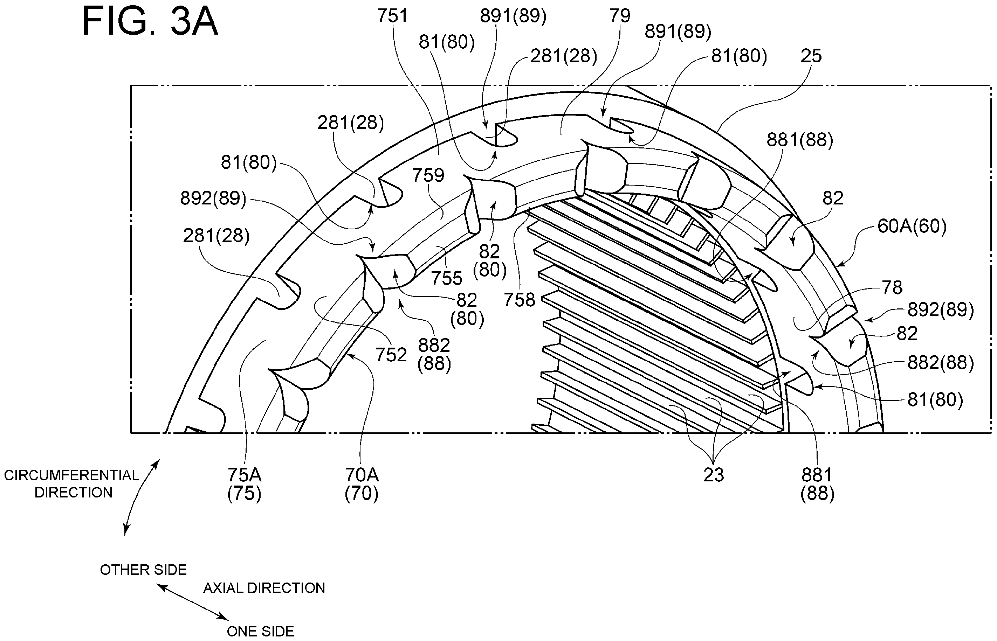

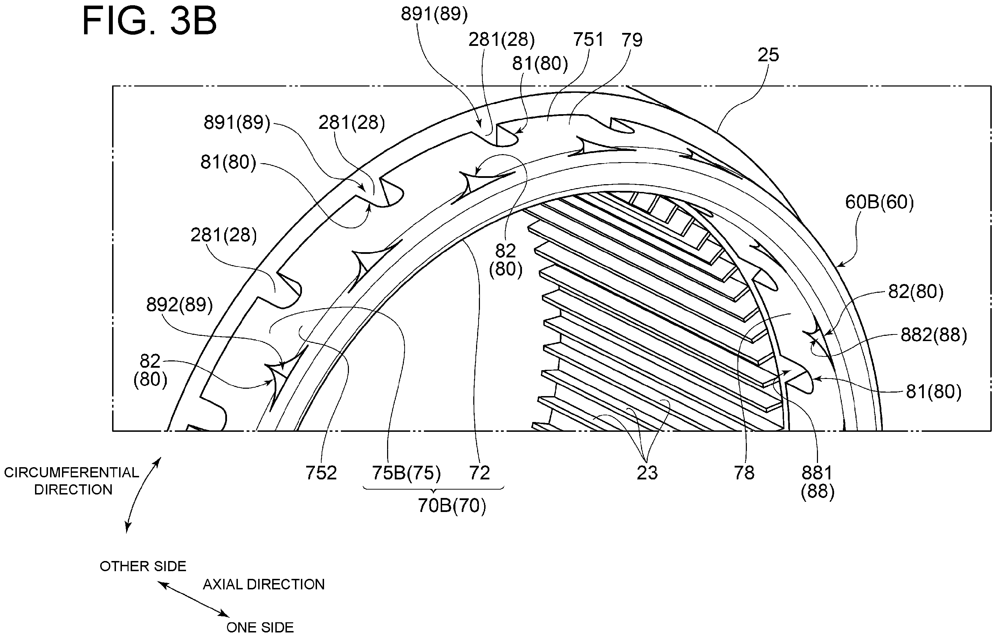

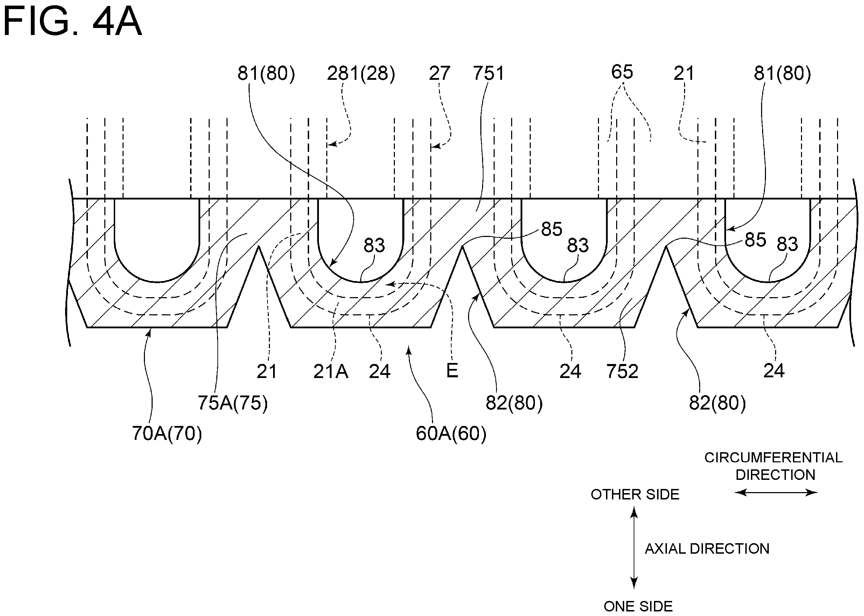

The detailed configuration of the resin member 60 will be illustrated with reference to FIGs. 1A to 4B. FIGs. 3A and 3B are each a schematic perspective view of the resin member 60A, 60B (60) according to an embodiment of the present disclosure. The resin member 60A, 60B (60) includes a lid part 70A, 70B (70). A lid body part 75A, 75B (75), which is a component of the lid part 70A, 70B (70), extends in the circumferential direction so as to cover the coil ends 21 (see FIGs. 1A and 1B) on one side of the stator core 25 in the axial direction. The lid body part 75 is opposed to the stator core 25 in the axial direction over the entire circumferential length of the stator core 25. The coil ends 21 are embedded in the lid body part 75 (see FIGs. 1A and 1B). As a more detailed example, one coil wire constituting each stator coil 27 is wound around the tooth 28, and this coil wire has a plurality of curved portions that constitute a bending portion 21A (see FIG. 4A) of the coil end 21. These curved portions are embedded in the lid body part 75.

As illustrated in FIGs. 1A and 1B, the resin member 60 further includes a filling part 65 which fills the slot opening 9 (see FIG. 2). The filling part 65 extends in the axial direction, and one end portion, on one side in the axial direction, of the filling part 65 is connected to the lid body part 75. The filling part 65 is formed integrally with the lid part 70. As shown in FIG. 2, in this example, a plurality of filling parts 65 fill a plurality of slot openings 9, respectively. The stator coils 27 are embedded in the filling parts 65. As a more detailed example, one coil wire constituting each stator coil 27 has a plurality of axial extension portions extending along the tooth 28 (i.e., in the axial direction), and these axial extension portions are embedded in the filling parts 65. This structure allows the resin member 60 to adhere closely to at least a part of the stator coil 27.

As illustrated in FIGs. 1A and 1B, the resin member 60 according to an embodiment of the present disclosure further includes another lid part 170 disposed opposite the lid part 70 with the filling part 65 therebetween. The other lid part 170 extends in the circumferential direction so as to cover the other coil ends 22 of the stator coils 27 on the other side of the stator core 25 in the axial direction. The other end portion, on the other side in the axial direction, of each filling part 65 is connected to the other lid part 170. The other lid part 170 in this example, formed integrally with each filling part 65, has a shape that is axially symmetrical with the lid part 70. For the sake of simplicity, a detailed explanation of the lid part 70 will be provided while omitting the details of the other lid part 170, either partially or entirely (the other lid part 170 is omitted in FIGs. 3A and 3B).

As illustrated in FIGs. 3A and 3B, the lid body part 75A, 75B (75) of the lid part 70A, 70B (70) has an inner peripheral surface 78, an outer peripheral surface 79, and at least one radial open portion 80. The radial opening portion 80 connects in the radial direction an inner opening 88 formed in the inner peripheral surface 78 and an outer opening 89 formed in the outer peripheral surface 79 (in other words, it provides radial communication). When the magnetic geared electrical machine 1 is in operation, air can flow inside the radial opening portion 80.

With the above configuration, even if the stator coil 27 generates heat as a result of energization, the heat generated in the stator coil 27 is transferred to the lid body part 75 via the filling part 65 or directly to the lid body part 75. The heat is then released from the lid part 70. Since the lid body part 75 of the lid part 70 has at least one radial opening portion 80, the surface area of the lid body part 75 exposed to the air surrounding the lid body part 75 is increased. Therefore, the heat dissipation of the lid part 70 is improved, resulting in the stator 20 with improved cooling performance.

Additionally, the resin member 60 with thermosetting properties according to an embodiment of the present disclosure may have a glass transition temperature of 130°C or higher. With the above configuration, the resin member 60 can sufficiently withstand heat generated in the stator coil 27, which improves the heat resistance of the stator 20.

Additionally, the stator 20 (see FIG. 2) according to an embodiment of the present disclosure includes a plurality of stator magnets 29 arranged in the circumferential direction on one side in the radial direction (in the example of FIG. 2, the radially inner side) relative to the stator core 25, as previously described. With the above configuration, even if the temperature of the stator core 25 rises due to heat generated in the stator magnets 29, the heat in the stator core 25 can be released from the lid part 70 of the resin member 60. Therefore, even when the stator 20 is applied to the magnetic geared electrical machine 1, the cooling performance of the stator 20 is sufficient to allow the magnetic geared electrical machine 1 to operate normally.

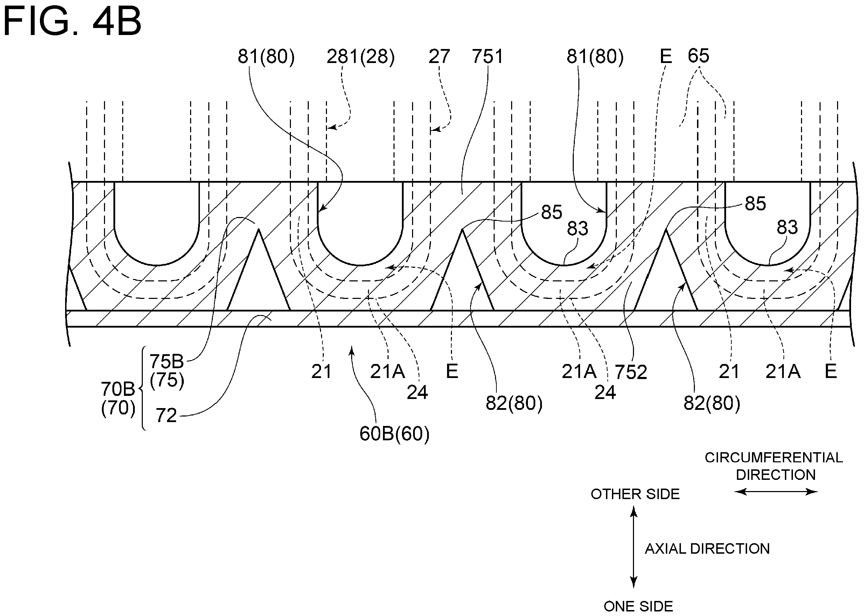

As illustrated in FIGs. 3A and 3B, the at least one radial opening portion 80 has a first radial opening portion 81. The first radial opening portion 81 is formed in an end portion 751 of the lid body part 75 on the other side in the axial direction. That is, the first radial opening portion 81 is not only open in the radial direction, but also open to the other side in the axial direction. The first radial opening portion 81 is disposed to face any of the teeth 28 in the axial direction. A part of the first radial opening portion 81 is located in an inner space E defined by the bending portion 21A of the coil end 21 (see FIGs. 4A and 4B). In other words, a part of the first radial opening portion 81 is located inside the bending portion 21A. Accordingly, an inner opening 881, which is the inner opening 88 of the first radial opening portion 81, and an outer opening 891, which is the outer opening 89 of the first radial opening portion 81, are located on opposite sides of the coil end 21 in the radial direction (see FIGs. 3A and 3B). In an embodiment of the present disclosure, a plurality of first radial opening portions 81 are provided corresponding to the plurality of coil ends 21. That is, the plurality of first radial opening portions 81 are arranged at equal intervals along the circumferential direction. However, this disclosure is not limited thereto. The number of first radial opening portions 81 may be one or two or more. For example, at least one first radial opening portion 81 may be provided for only at least one particular coil end 21 where temperature rise is a concern.

With the above configuration, since the first radial opening portion 81 is located in the inner space E of the coil end 21, the distance between the coil end 21 and the first radial opening portion 81 can be reduced. This configuration facilitates the transfer of heat generated at the coil end 21 to the first radial opening portion 81, thus further improving the cooling performance of the stator 20.

As illustrated in FIGs. 3A and 3B, the at least one radial opening portion 80 has a second radial opening portion 82. The second radial opening portion 82 is located between two circumferentially adjacent coil ends 21 (see FIGs. 4A and 4B). Accordingly, both an inner opening 882, which is the inner opening 88 of the second radial opening portion 82, and an outer opening 892, which is the outer opening 89 of the second radial opening portion 82, are located between two adjacent coil ends 21. As an example, the second radial opening portion 82 is formed in an end portion 752 of the lid body part 75 on one side in the axial direction. Further, the second radial opening portion 82 according to an embodiment of the present disclosure is located between any two circumferentially adjacent coil ends 21. That is, the plurality of second radial opening portions 82 are arranged at equal intervals along the circumferential direction. However, this disclosure is not limited thereto. The number of second radial opening portions 82 may be one or two or more. For example, the second radial opening portion 82 may be provided only between a particular coil end 21 where temperature rise is a concern and its adjacent coil end 21.

With the above configuration, since the second radial opening portion 82 is located between two circumferentially adjacent coil ends 21, the distance between the coil ends 21 and the second radial opening portion 82 can be reduced. This configuration facilitates the transfer of heat generated at the coil ends 21 to the second radial opening portion 82, thus further improving the cooling performance of the stator 20.

As illustrated in FIGs. 4A and 4B, the second radial opening portion 82 is configured such that the circumferential length decreases from one side toward the other side in the axial direction. Further, an end portion 85 of the second radial opening portion 82 on the other side is located on the other side relative to an end portion 24 of the coil end 21 on one side. In this example, the end portion 85 of the second radial opening portion 82 is located on the other side relative to an end portion 83 of the first radial opening portion 81 on one side in the axial direction. The end portion 24 of the coil end 21 coincides with the end portion of the bending portion 21A on one side. With the above configuration, since at least a part of the second radial opening portion 82 is juxtaposed with the coil end 21 in the circumferential direction, the distance between the coil end 21 and the second radial opening portion 82 can be reduced. This configuration facilitates the transfer of heat generated at the coil end 21 to the second radial opening portion 82, thus further improving the cooling performance of the stator 20.

As illustrated in FIGs. 4A and 4B, the first radial opening portion 81 and the second radial opening portion 82 are displaced from each other in the circumferential direction. In the example shown in the figures, a plurality of first radial opening portions 81 and a plurality of second radial opening portions 82 are arranged alternately with each other in the circumferential direction. If the first radial opening portion 81 and the second radial opening portion 82 are aligned in the circumferential direction, the lid body part 75 may become longer in the axial direction to ensure the axial length of the portion of the lid body part 75 between the first radial opening portion 81 and the second radial opening portion 82. In this regard, with the above configuration, since the first radial opening portion 81 and the second radial opening portion 82 are displaced from each other in the circumferential direction, the axial length of the lid body part 75 can be shortened, and the lid body part 75 can be made compact.

The lid part 70A illustrated in FIG. 3A is composed of the lid body part 75A. The second radial opening portion 82 illustrated in this figure opens to one side at the end portion 752 of the lid body part 75 on one side in the axial direction. With the above configuration, since the second radial opening portion 82 is not only open in the radial direction, but also open to one side in the axial direction, the air flow in the second radial opening portion 82 is prevented from being stagnant. This structure facilitates heat exchange between the second radial opening portion 82 and air, thus further improving the cooling performance of the stator 20.

The lid body part 75A of the lid part 70A illustrated in FIG. 3A has one end surface 755, which is an end surface on one side in the axial direction. The one end surface 755 in this example is a plane perpendicular to the axial direction and extends in the circumferential direction. Further, the lid body part 75A has at least one of an inner tapered surface 758 connecting the one end surface 755 and the inner peripheral surface 78 or an outer tapered surface 759 connecting the one end surface 755 and the outer peripheral surface 79. The lid body part 75A in this figure has both the inner tapered surface 758 and the outer tapered surface 759, but this disclosure is not limited thereto. That is, the lid body part 75A may have either the inner tapered surface 758 or the outer tapered surface 759, but not the other. With the above configuration, the presence of at least one of the inner tapered surface 758 or the outer tapered surface 759 allows the lid body part 75A to be closer to the coil end 21 than when the lid body part 75A has a non-chamfered shape. This configuration facilitates the transfer of heat generated at the coil end 21 to the lid body part 75A, thus further improving the cooling performance of the stator 20.

The lid part 70B illustrated in FIG. 3B has the above-described lid body part 75B and a ring part 72 connected to the end portion 752 of the lid body part 75B. The ring part 72 is connected to the end portion 752 over the entire circumferential length of the lid body part 75B. The second radial opening portion 82 illustrated in FIG. 3B is formed between the lid body part 75B and the ring part 72. This second radial opening portion 82 is closed from one side in the axial direction by the ring part 72 and is open only in the radial direction.

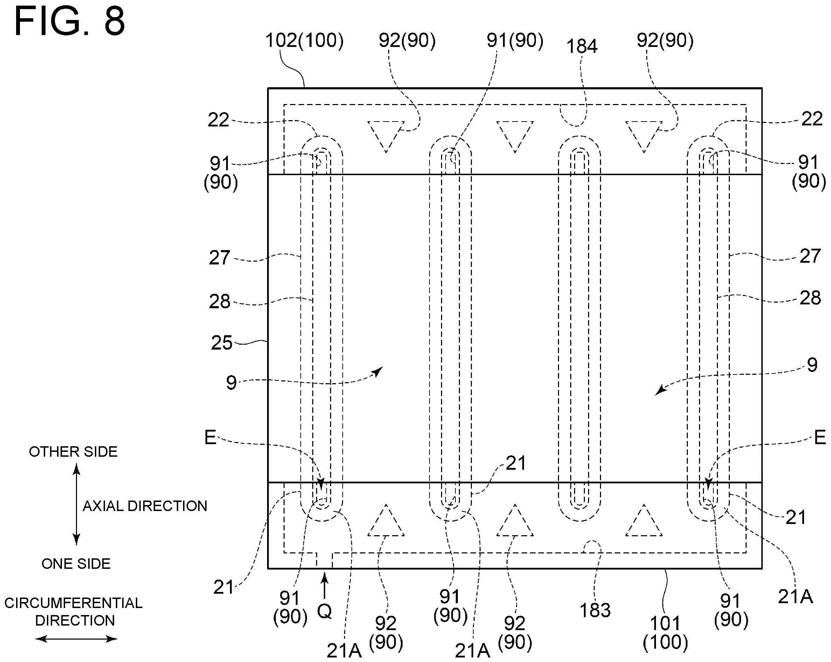

With the above configuration, the axial length of the lid part 70B is increased by the the ring part 72, so that the surface area of the lid part 70B exposed to the air surrounding the lid part 70B is increased. Thus, the cooling performance of the stator 20 is further improved. In addition, in the process of molding the resin member 60 (details are described below), liquid resin to form the resin member 60 tends to be difficult to flow because a later-described core 90 (see FIG. 8) is placed in the position where the second radial opening portion 82 is formed. In this regard, with the above configuration, the flow path for liquid resin to form the circumferentially extending ring part 72 is provided in the molding process, so that the flow of liquid resin is prevented from being stagnant near where the second radial opening portion 82 is formed.

The resin material constituting the resin member 60B (60) may contain ceramic filler. This improves the thermal conductivity of the resin member 60B and reduces the thermal contraction caused by temperature changes. The inclusion of ceramic filler tends to increase the viscosity of the liquid resin used in the process of molding the resin member 60, making it more difficult for the liquid resin to flow inside a molding mold 100 (see FIG. 8). In this regard, if the resin member 60B has the ring part 72, the flow path to form the ring part 72 functions to make it easier for the liquid resin to flow, thereby simplifying the molding process of the resin member 60B. The ceramic filler may be contained in the resin material constituting the resin member 60A (60), which has no ring part 72. It is possible to fill the inside of the molding mold 100 with the liquid resin containing ceramic filler by adjusting various conditions of the molding process of the resin member 60A, such as the filling pressure applied when filling the molding mold 100 with the liquid resin.

### <5. Supplement for stator 20>

The above-described stator 20 incorporated in the magnetic geared electrical machine 1 has a plurality of stator magnets 29, but the present disclosure is not limited thereto. For example, the stator 20 may be incorporated in a motor without a pole piece rotor 30, such as a stepper motor or DC motor. Even in this case, the stator 20 with improved cooling performance is achieved for the reasons already described.

### <6. Method for producing stator according to one embodiment>

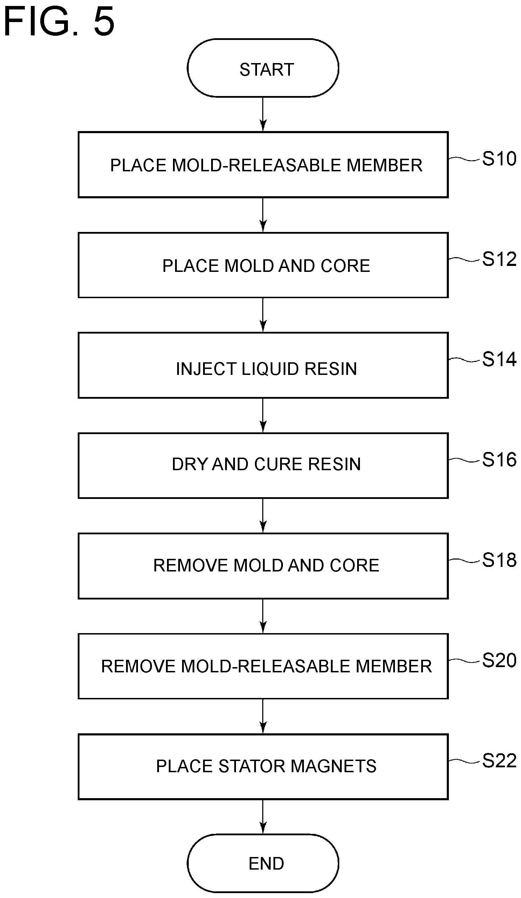

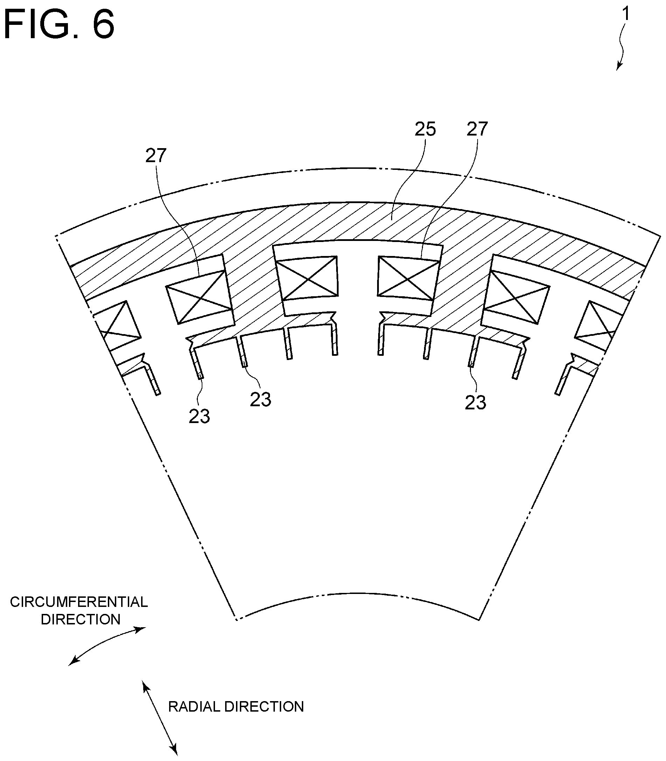

With reference to FIGs. 5 to 9, a method for producing the stator 20 according to an embodiment will be described. Prior to the start of the producing method described below, a plurality of stator coils 27 is already installed on the stator core 25 (see FIG. 6). In the following, the method for producing the stator 20 including the resin member 60B (see FIG. 3B) will be illustrated.

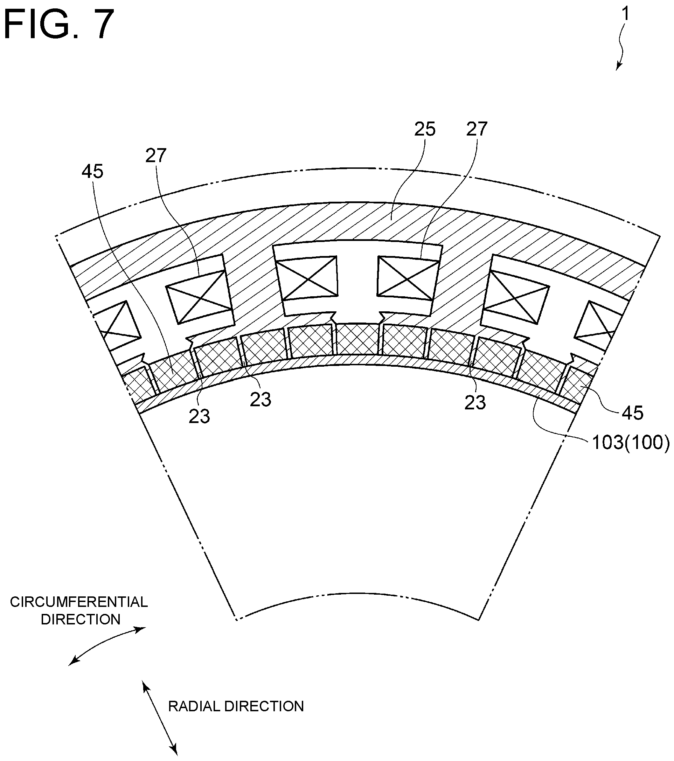

First, the step of placing a mold-releasable member 45 is performed (S10), as shown in FIG. 5. The mold-releasable member 45 has the same shape as the stator magnet 29. The details of S10 are as follows as an example. As shown in FIGs. 6 and 7, the mold-releasable member 45 is inserted between two circumferentially adjacent fingers 23 (FIG. 6 shows the state before insertion of the mold-releasable member 45 and FIG. 7 shows the state after insertion). As a result, the space between the two circumferentially adjacent fingers 23 is filled with the axially extending mold-releasable member 45. The material forming the mold-releasable member 45 is a material with excellent mold releasability, such as silicone or polytetrafluoroethylene, for example.

Next, as shown in FIG. 5, the step of placing a molding mold 100 to form the resin member 60B using liquid resin and at least one core 90 to form the at least one radial opening portion 80 is performed (S12). The liquid resin is the material to form the resin member 60. The details of S12 are as follows as an example.

As shown in FIG. 8, the molding mold 100 includes a first mold 101 placed so as to cover the plurality of coil ends 21 arranged in the circumferential direction, a second mold 102 placed so as to cover the plurality of other coil ends 22 arranged in the circumferential direction, and a cylindrical third mold 103 (see FIG. 7) placed so as to cover the plurality of fingers 23 and plurality of mold-releasable members 45 from the radially inner side. The first mold 101 has a first groove 183 shaped to form the lid part 70B (70), and the second mold 102 has a second groove 184 shaped to form the other lid part 170. The first groove 183 is located on one side in the axial direction relative to the stator core 25, and the second groove 184 is located on the other side in the axial direction relative to the stator 20. Both the first groove 183 and the second groove 184 extend in the circumferential direction. The space surrounded by the first mold 101 and the space surrounded by the second mold 102 communicate with each of the plurality of slot openings 9.

Continue with a detailed description of S12. The at least one core 90 is placed in the space surrounded by the first mold 101, in a more detailed example, in the inner space of the first groove 183. The at least one core 90 includes a first core 91 to form the first radial opening portion 81 and a second core 92 to form the second radial opening portion 82. The first core 91 is placed in the inner space E defined by the bending portion 21A of the coil end 21. The second core 92 is placed between two circumferentially adjacent coil ends 21. The first core 91 and the second core 92 are preferably made of a material with excellent mold releasability, such as silicone or polytetrafluoroethylene, for example. The core 90 is also placed in the space surrounded by the second mold 102. That is, the core 90 is also placed in the inner space of the second groove 184. This placing method is similar to the method of placing the core 90 in the first groove 183, so a detailed explanation is omitted.

In S12, a tool (not shown) is used to keep the first mold 101 and the second mold 102 pressed against the stator core 25. This prevents the first mold 101 and the second mold 102 from separating from the stator core 25 while the liquid resin is injected as described below.

Next, as shown in FIG. 5, the step of injecting liquid thermosetting resin into the inner space surrounded by the molding mold 100 and filling the slot opening 9 with the resin is performed (S14). For example, as shown in FIG. 8, the stator core 25 is placed so that the axial direction of the stator 20 coincides with the vertical direction. The liquid resin is then injected into the inner space of the first mold 101 located below the stator core 25 (Arrow Q). As a result, the liquid resin spreads through the inner space of the first groove 183, the plurality of slot openings 9, and the inner space of the second groove 184. Further, the plurality of stator coils 27 is immersed in the liquid resin. The first groove 183 includes a circumferentially extending portion shaped in conformity with the ring part 72 (see FIG. 3B), and the liquid resin flows through this portion. This prevents the flow of liquid resin from being stagnant due to placing the second core 92.

Before injecting the liquid resin, the space surrounded by the first mold 101, the plurality of slot openings 9, and the space surrounded by the second mold 102 may be vacuumed, for example, using a vacuum pump. However, vacuuming is not an essential step in the present disclosure. If the filling pressure to inject the liquid resin into the first mold 101 is high, S14 can be performed without vacuuming.

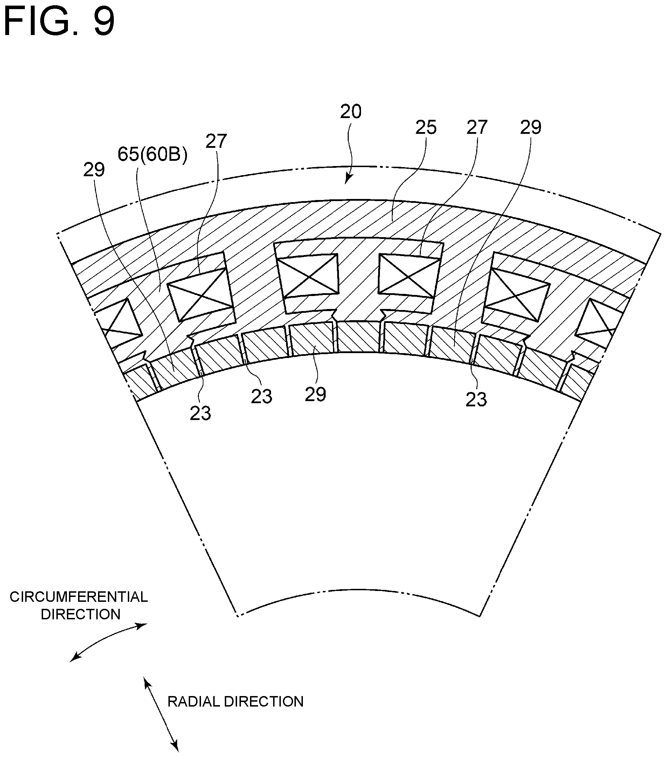

Next, as shown in FIG. 5, the step of drying and curing the liquid resin is performed (S16). For example, the temperature of the liquid resin is raised to a specified temperature through heating of the molding mold 100. As a result, the liquid resin is dried and cured to form the resin member 60B. Next, the step of removing the molding mold 100 and the core 90 is performed (S18), and the step of removing the mold-releasable member 45 is performed (S20). Since the core 90 and the mold-releasable member 45 have mold releasability, the core 90 can be easily detached from the resin member 60B and the mold-releasable member 45 can be easily detached from the fingers 23. Next, the step of placing each stator magnet 29 between two adjacent fingers 23 is performed (S22). S22 is executed to complete the stator 20 including the resin member 60B, as shown in FIG. 9.

With the above producing method, the resin member 60 including at least one radial opening portion 80 can be formed, and for the reasons already described, the method for producing the stator 20 with improved cooling performance is achieved.

Since the at least one core 90 includes the first core 91 and the second core 92, the first radial opening portion 81 and the second radial opening portion 82 can be formed. Therefore, the method for producing the stator 20 with improved cooling performance is achieved for the reasons already described.

During the step of filling with the liquid resin (S14), the stator core 25 is arranged so that the axial direction of the stator core 25 coincides with the vertical direction. This allows the liquid resin to flow from bottom to top along the vertical direction through the slot openings 9, making it easier to fill the slot openings 9 with the liquid resin.

Additionally, since the mold-releasable member 45 is placed (S10) before the step of filling with the liquid resin, it is possible to prevent the resin from entering between two circumferentially adjacent fingers 23 during S14. Furthermore, since the liquid resin is dried and cured (S16) before the step of placing the stator magnets 29, heat generated in S16 is prevented from being transferred to the stator magnets 29. Therefore, it is possible to avoid the demagnetization of the stator magnets 29 due to temperature rise.

Nevertheless, the method for producing the stator 20 of the present disclosure is not limited to the above-described embodiment. If the stator 20 is produced with the resin member 60A instead of the resin member 60B, the core 90 need not include the second core 92. The number of cores 90 is not necessarily plural. The number of cores 90 is the same as the number of radial opening portions 80 in the resin member 60. If the number of radial opening portions 80 is one when the stator 20 is complete, the number of cores 90 is one. The first mold 101 may be positioned on the upper side of the stator core 25 when the step of filling with the liquid resin is performed (S14). In this case, the liquid resin flows from top to bottom along the vertical direction through the slot openings 9. Alternatively, the stator core 25 may be placed horizontally when the step of filling with the liquid resin is performed (S14). In either embodiment, at least one of the above advantages can be obtained.

### <7. Method for producing stator according to another embodiment>

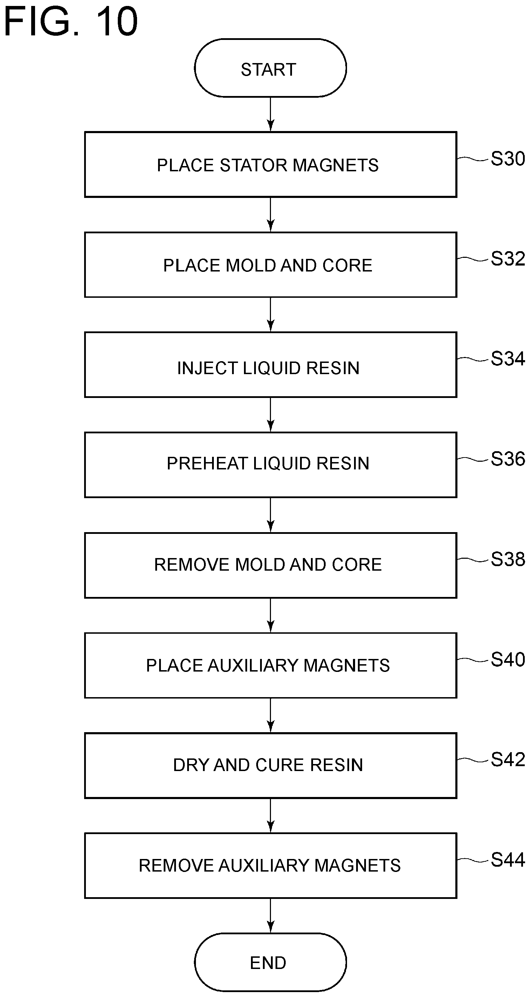

With reference to FIGs. 6, 9, and 10 to 12, a method for producing the stator 20 according to another embodiment will be described. Prior to the start of the producing method described below, a plurality of stator coils 27 is already installed on the stator core 25 (see FIG. 6). The resin member 60 of the stator 20 produced by the method described below may be either resin member 60A or 60B. Since S32, S34, and S38 shown in FIG. 10 are similar to previously mentioned S12, S14, and S18 shown in FIG. 5, the explanation of these steps will be simplified or omitted.

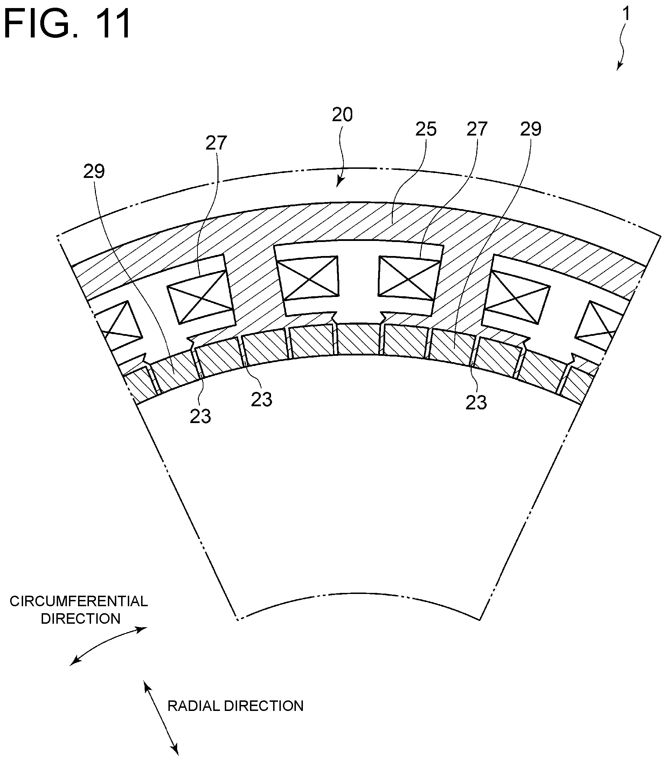

First, the step of placing the stator magnets 29 between two circumferentially adjacent fingers 23 is performed (S30), as shown in FIGs. 10 and 11. Next, the step of placing the molding mold 100 and the at least one core 90 is performed (S32), and the step of filling the mold with liquid resin is performed (S34).

Next, as shown in FIG. 10, the step of preheating the filling liquid resin to a first temperature is performed (S36). The first temperature is the temperature at which the liquid resin is cured to the extent that it loses its fluidity. This heating is performed, for example, through heating of the molding mold 100. The resin after S36 may contain moisture. The step of removing the molding mold 100 and the at least one core 90 is then performed (S38).

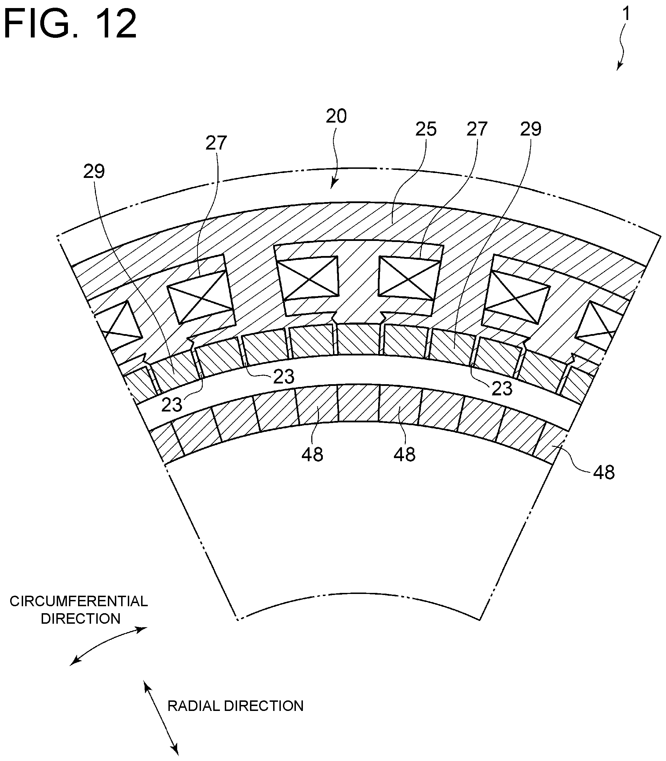

Next, as shown in FIG. 10, the step of placing a plurality of auxiliary magnets 48 is performed (S40). As illustrated in more detail in FIG. 12, the plurality of auxiliary magnets 48 are arranged in the circumferential direction on one side in the radial direction (radially inner side in the example of this figure) relative to the plurality of stator magnets 29. The number of auxiliary magnets 48 is the same as the number of stator magnets 29, and each auxiliary magnet 48 is opposed to each stator magnet 29 in the radial direction. The respective magnetization directions of the radially opposed auxiliary magnet 48 and stator magnet 29 are the same as each other. Further, as an example, the residual flux density of each auxiliary magnet 48 is greater than that of the opposed stator magnet 29 it faces.

Next, the step of heating the resin to a second temperature that is higher than the first temperature is performed (S42). The second temperature is the temperature at which the resin can dry and cure completely and is lower than the glass transition temperature of the resin. This heating may be performed by directly blowing hot air or through heating of the stator core 25. As a result, the resin member 60 is formed. Finally, the auxiliary magnets 48 are removed (S44), and the stator 20 is completed (see FIG. 9).

With the above configuration, since the auxiliary magnets 48 are placed, in the step (S42) of heating the resin to the second temperature, even if heat generated in S42 is transmitted to the stator magnets 29, the demagnetization of the stator magnets 29 is suppressed by the placement of the auxiliary magnets 48. In particular, when the glass transition temperature of the resin member 60 is high, the second temperature also tends to be high. In this regard, with the above configuration, even if the temperature of the stator magnets 29 rises during S42 due to the high second temperature, the demagnetization of the stator magnets 29 is suppressed by the placement of the auxiliary magnets 48.

In addition, as the filling resin is preheated (S36), the resin loses its fluidity. As a result, the molding mold 100 and the core 90 can be removed (S38) before the resin is dried and cured (S42). Thus, the plurality of auxiliary magnets 48 can be placed (S40) after removing the molding mold 100 and the core 90 and before drying and curing the resin. Since the molding mold 100 and the core 90 do not interfere with the placement of the auxiliary magnets 48, the method for producing the stator 20 can be simplified.

### <8. Conclusion>

The contents described in some embodiments described above would be understood as follows, for instance.
1) A stator (20) according to at least one embodiment of the present disclosure includes: a stator core (25) extending in a circumferential direction with respect to an axis; a plurality of teeth (28) protruding from the stator core (25) to one side in a radial direction and arranged at intervals in the circumferential direction; a plurality of stator coils (27) wound around the plurality of teeth (28), each of the plurality of stator coils (27) including a coil end (21) located on one side of the stator core (25) in an axial direction; and a resin member (60) disposed on the stator core (25). The resin member (60) includes: a filling part (65) which fills a slot opening (9) formed between two circumferentially adjacent teeth of the plurality of teeth (28) and extends in the axial direction; and a lid part (70) having a lid body part (75) which is connected to one end portion of the filling part (65) in the axial direction and extends in the circumferential direction so as to cover the coil end (21) on the one side of the stator core (25) in the axial direction. The lid body part (75) has: an inner peripheral surface (78); an outer peripheral surface (79); and at least one radial opening portion (80) which connects in the radial direction an inner opening (88) formed in the inner peripheral surface (78) and an outer opening (89) formed in the outer peripheral surface (79).
   With the above configuration 1), even if the stator coil (27) generates heat as a result of energization, the heat generated in the stator coil (27) is transferred to the lid body part (75) via the filling part (65) or directly to the lid body part (75). The heat is then released from the lid part (70). Since the lid body part (75) of the lid part (70) has at least one radial opening portion (80), the surface area of the lid body part (75) exposed to the air surrounding the lid body part (75) is increased. Therefore, the heat dissipation of the lid part (70) is improved, resulting in the stator (20) with improved cooling performance.
2) In some embodiments, in the stator (20) as defined in the above 1), the at least one radial opening portion (80) has a first radial opening portion (81) located in an inner space (E) defined by a bending portion (21A) of the coil end (21).
   With the above configuration 2), since the first radial opening portion (81) is located in the inner space (E) of the coil end (21), the distance between the coil end (21) and the first radial opening portion (81) can be reduced. This configuration facilitates the transfer of heat generated at the coil end (21) to the first radial opening portion (81), thus further improving the cooling performance of the stator (20).
3) In some embodiments, in the stator (20) as defined in the above 1) or 2), the at least one radial opening portion (80) has a second radial opening portion (82) located between two circumferentially adjacent coil ends (21).
   With the above configuration 3), since the second radial opening portion (82) is located between two circumferentially adjacent coil ends (21), the distance between the coil ends (21) and the second radial opening portion (82) can be reduced. This configuration facilitates the transfer of heat generated at the coil ends (21) to the second radial opening portion (82), thus further improving the cooling performance of the stator (20).
4) In some embodiments, in the stator (20) as defined in the above 3), the second radial opening portion (82) opens to the one side at an end portion (752) of the lid body part (75) on the one side.
   With the above configuration 4), since the second radial opening portion (82) is not only open in the radial direction, but also open to the one side in the axial direction, the air flow in the second radial opening portion (82) is prevented from being stagnant. This structure facilitates heat exchange between the second radial opening portion (82) and air, thus further improving the cooling performance of the stator (20).
5) In some embodiments, in the stator (20) as defined in the above 3), the lid part (70) further has a ring part (72) connected to an end portion (752) of the lid body part (75) on the one side in the axial direction. The second radial opening portion (82) is formed between the lid body part (75) and the ring part (72).
   With the above configuration 5), the axial length of the lid part (70) is increased by the ring part (72), so that the surface area of the lid part (70) exposed to the air surrounding the lid part (70) is increased. Thus, the cooling performance of the stator (20) is further improved. In addition, in the process of molding the resin member (60), liquid resin to form the resin member (60) tends to be difficult to flow because a core (90) is placed in the position where the second radial opening portion (82) is formed. In this regard, with the above configuration 5), the flow path for liquid resin to form the circumferentially extending ring part (72) is provided in the molding process, so that the flow of liquid resin is prevented from being stagnant near where the second radial opening portion (82) is formed.
6) In some embodiments, in the stator (20) as defined in any of the above 3) to 5), the second radial opening portion (82) is configured such that a circumferential length decreases toward the other side in the axial direction. An end portion (85) of the second radial opening portion (82) on the other side is located on the other side relative to an end portion (24) of the coil end (21) on the one side.
   With the above configuration 6), since at least a part of the second radial opening portion (82) is juxtaposed with the coil end (21) in the circumferential direction, the distance between the coil end (21) and the second radial opening portion (82) can be reduced. This configuration facilitates the transfer of heat generated at the coil end (21) to the second radial opening portion (82), thus further improving the cooling performance of the stator (20).
7) In some embodiments, in the stator (20) as defined in the above 4), the lid body part (75) has: one end surface (755) which is an end surface on the one side in the axial direction; and at least one of an inner tapered surface (758) connecting the one end surface (755) and the inner peripheral surface (78) or an outer tapered surface (759) connecting the one end surface (755) and the outer peripheral surface (79).
   With the above configuration 7), the presence of at least one of the inner tapered surface (758) or the outer tapered surface (759) allows the lid body part (75) to be closer to the coil end (21) than when the lid body part (75) has a non-chamfered shape. This configuration facilitates the transfer of heat generated at the coil end (21) to the lid body part (75), thus further improving the cooling performance of the stator (20).
8) In some embodiments, in the stator (20) as defined in any of the above 1) to 7), the at least one radial opening portion (80) has a first radial opening portion (81) located in an inner space (E) defined by a bending portion (21A) of the coil end (21); and a second radial opening portion (82) located between two circumferentially adjacent coil ends (21). The first radial opening portion (81) and the second radial opening portion (82) are displaced from each other in the circumferential direction.
   If the first radial opening portion (81) and the second radial opening portion (82) are aligned in the circumferential direction, the lid body part (75) may become longer in the axial direction to ensure the axial length of the portion of the lid body part (75) between the first radial opening portion (81) and the second radial opening portion (82). In this regard, with the above configuration 8), since the first radial opening portion (81) and the second radial opening portion (82) are displaced from each other in the circumferential direction, the axial length of the lid body part (75) can be shortened, and the lid body part (75) can be made compact.
9) In some embodiments, the stator (20) as defined in any of the above 1) to 8) further includes a plurality of stator magnets (29) arranged in the circumferential direction on the one side in the radial direction relative to the stator core (25).
   With the above configuration 9), even if the temperature of the stator core (25) rises due to heat generated in the stator magnets (29), the heat in the stator core (25) can be released from the lid part (70) of the resin member (60). Therefore, even when the stator (20) is applied to the magnetic geared electrical machine (1), the cooling performance is sufficient to allow the magnetic geared electrical machine (1) to operate normally.
10) In some embodiments, in the stator (20) as defined in any of the above 1) to 9), the resin member (60) has a glass transition temperature of 130°C or higher.
   With the above configuration 10), the resin member (60) can sufficiently withstand heat generated in the stator coil (27), which improves the heat resistance of the stator (20).
(11) A method for producing a stator (20) according to at least one embodiment of the present invention is a method for producing the stator (20) as defined in any of the above 1) to 10), including: a step (S12, S32) of placing a mold (first mold 101) so as to cover a plurality of the coil ends (21) arranged in the circumferential direction and placing, in a space surrounded by the mold (first mold 101), at least one core (90) to form the at least one radial opening portion (80) on the one side in the axial direction relative to the stator core (25); a step (S14, S34) of injecting liquid resin into the space surrounded by the mold (first mold 101) to form the resin member (60) and filling the slot opening (9) with the liquid resin; a step (S16, S42) of drying and curing the resin; and a step (S18, S38) of removing the mold (first mold 101) and the at least one core (90).
   With the above configuration 11), the resin member (60) including the at least one radial opening portion (80) can be formed. Therefore, the method for producing the stator (20) with improved cooling performance is achieved for the same reasons as described in 1).
12) In some embodiments, in the method for producing the stator (20) as defined in the above 11), the at least one radial opening portion (80) has a first radial opening portion (81) located in an inner space (E) defined by a bending portion (21A) of the coil end (21). The at least one core (90) includes a first core (91) to form the first radial opening portion (81).
   With the above configuration 12), the first radial opening portion (81) can be formed. Therefore, the method for producing the stator (20) with improved cooling performance is achieved for the same reasons as described in 2).
13) In some embodiments, in the method for producing the stator (20) as defined in the above 11) or 12), the at least one radial opening portion (80) has a second radial opening portion (82) located between two circumferentially adjacent coil ends (21). The at least one core (90) includes a second core (92) to form the second radial opening portion (82).
   With the above configuration 13), the second radial opening portion (82) can be formed. Therefore, the method for producing the stator (20) with improved cooling performance is achieved for the same reasons as described in 3).
14) In some embodiments, in the method for producing the stator (20) as defined in any of the above 11) to 13), in the step (S14, S34) of filling with the resin, the resin is injected into the space while the stator core (25) is arranged so that the axial direction coincides with a vertical direction.
   With this configuration 14), the liquid resin can flow along the vertical direction through the slot opening (9), making it easier to fill the slot opening (9) with the liquid resin.
15) In some embodiments, in the method for producing the stator (20) as defined in any of the above 11) to 14), the stator (20) further includes: a plurality of fingers (23) protruding from the plurality of teeth (28) to the one side in the radial direction and arranged at intervals in the circumferential direction; and a plurality of stator magnets (29) arranged alternately with the plurality of fingers (23) in the circumferential direction. The method further includes: a step (S10) of placing a mold-releasable member (45) between two circumferentially adjacent fingers (23) before the step (S14) of filling with the resin; a step (S20) of removing the mold-releasable member (45) after the step (S18) of removing the mold (first mold 101) and the at least one core (90); and a step (S22) of placing each stator magnet (29) between the two adjacent fingers (23) after the step (S20) of removing the mold-releasable member (45).
   With the above configuration 15), it is possible to prevent the resin from entering between two circumferentially adjacent fingers (23) during injection of the liquid resin. Furthermore, since the liquid resin is dried and cured before the stator magnets (29) are placed, heat generated by drying and curing of the resin is prevented from being transferred to the stator magnets (29), and it is possible to avoid the demagnetization of the stator magnets (29) due to temperature rise.
16) In some embodiments, in the method for producing the stator (20) as defined in any of the above 11) to 14), the stator (20) further includes: a plurality of fingers (23) protruding from the plurality of teeth (28) to the one side in the radial direction and arranged at intervals in the circumferential direction; and a plurality of stator magnets (29) arranged alternately with the plurality of fingers (23) in the circumferential direction. The method further includes: a step (S30) of placing each stator magnet (29) between two circumferentially adjacent fingers (23); a step (S40) of placing a plurality of auxiliary magnets (48) so as to be arranged in the circumferential direction on the one side in the radial direction relative to the plurality of stator magnets (29); and a step (S44) of removing the plurality of auxiliary magnets (48) after the step (S42) of drying and curing the resin.
   With the above configuration 16), even if heat generated by drying and curing of the resin is transmitted to the stator magnets (29), the demagnetization of the stator magnets (29) is suppressed by the placement of the auxiliary magnets (48).
17) In some embodiments, the method for producing the stator (20) as defined in the above 16) further includes a step (S36) of preheating the resin injected into the mold (first mold 101) to a first temperature after the step (S34) of filling with the resin and before the step (S38) of removing the mold (first mold 101) and the at least one core (90). The step (S38) of removing the mold (first mold 101) and the at least one core (90) is performed after the step (S36) of preheating and before the step (S40) of placing the plurality of auxiliary magnets (48). In the step (S42) of drying and curing the resin, the resin is heated to a second temperature that is higher than the first temperature after the step (S40) of placing the plurality of auxiliary magnets (48).

With the above configuration 17), the preheating of the filling resin causes the resin to lose its fluidity. As a result, the mold (first mold 101) and the core (90) can be removed before the resin is dried and cured. Thus, after removing the mold (first mold 101) and the core (90) and before drying and curing the resin, the plurality of auxiliary magnets (48) can be placed. Since the mold (first mold 101) and the core (90) do not interfere with the placement of the auxiliary magnets (48), the method for producing the stator (20) can be simplified.

### Reference Signs List

- 1: Magnetic geared electrical machine
- 5: Rotational shaft
- 7: External rotating device
- 8: Power transmission shaft
- 9: Slot opening
- 10: Magnet rotor
- 15: Rotor core
- 19: Rotor magnet
- 20: Stator
- 21: Coil end
- 21A: Bending portion
- 22: Other coil end
- 23: Finger
- 24: End portion
- 25: Stator core
- 27: Stator coil
- 28: Tooth
- 29: Stator magnet
- 30: Pole piece rotor
- 34: Flange
- 45: Mold-releasable member
- 48: Auxiliary magnet
- 50: Annular unit
- 52: Non-magnetic body
- 55: Pole piece
- 56: Pole piece air passage
- 60: Resin member
- 65: Filling part
- 70: Lid part
- 72: Ring part
- 75: Lid body part
- 78: Inner peripheral surface
- 79: Outer peripheral surface
- 80: Radial opening portion
- 81: First radial opening portion
- 82: Second radial opening portion
- 83: End portion
- 85: End portion
- 88, 881, 891: Inner opening
- 89, 882, 892: Outer opening
- 90: Core
- 91: First core
- 92: Second core
- 101: First mold (Mold)
- 751: End portion
- 752: End portion
- 755: One end surface
- 758: Inner tapered surface
- 759: Outer tapered surface
- E: Inner space

## Claims

1. A stator, comprising:
a stator core extending in a circumferential direction with respect to an axis;
a plurality of teeth protruding from the stator core to one side in a radial direction and arranged at intervals in the circumferential direction;
a plurality of stator coils wound around the plurality of teeth, each of the plurality of stator coils including a coil end located on one side of the stator core in an axial direction; and
a resin member disposed on the stator core,
wherein the resin member includes:
a filling part which fills a slot opening formed between two circumferentially adjacent teeth of the plurality of teeth and extends in the axial direction; and
a lid part having a lid body part which is connected to one end portion of the filling part in the axial direction and extends in the circumferential direction so as to cover the coil end on the one side of the stator core in the axial direction, and
wherein the lid body part has:
an inner peripheral surface;
an outer peripheral surface; and
at least one radial opening portion which connects in the radial direction an inner opening formed in the inner peripheral surface and an outer opening formed in the outer peripheral surface.

2. The stator according to claim 1,
wherein the at least one radial opening portion has a first radial opening portion located in an inner space defined by a bending portion of the coil end.

3. The stator according to claim 1 or 2,
wherein the at least one radial opening portion has a second radial opening portion located between two circumferentially adjacent coil ends.

4. The stator according to claim 3,
wherein the second radial opening portion opens to the one side at an end portion of the lid body part on the one side.

5. The stator according to claim 3,
wherein the lid part further has a ring part connected to an end portion of the lid body part on the one side in the axial direction, and
wherein the second radial opening portion is formed between the lid body part and the ring part.

6. The stator according to claim 3,
wherein the second radial opening portion is configured such that a circumferential length decreases toward the other side in the axial direction, and
wherein an end portion of the second radial opening portion on the other side is located on the other side relative to an end portion of the coil end on the one side.

7. The stator according to claim 4,
wherein the lid body part has:
one end surface which is an end surface on the one side in the axial direction; and
at least one of an inner tapered surface connecting the one end surface and the inner peripheral surface or an outer tapered surface connecting the one end surface and the outer peripheral surface.

8. The stator according to claim 1 or 2,
wherein the at least one radial opening portion has:
a first radial opening portion located in an inner space defined by a bending portion of the coil end; and
a second radial opening portion located between two circumferentially adjacent coil ends, and
wherein the first radial opening portion and the second radial opening portion are displaced from each other in the circumferential direction.

9. The stator according to claim 1 or 2, further comprising a plurality of stator magnets arranged in the circumferential direction on the one side in the radial direction relative to the stator core.

10. The stator according to claim 1 or 2,
wherein the resin member has a glass transition temperature of 130°C or higher.

11. A method for producing the stator according to claim 1, comprising:
a step of placing a mold so as to cover a plurality of the coil ends arranged in the circumferential direction and placing, in a space surrounded by the mold, at least one core to form the at least one radial opening portion on the one side in the axial direction relative to the stator core;
a step of injecting liquid resin into the space surrounded by the mold to form the resin member and filling the slot opening with the liquid resin;
a step of drying and curing the resin; and
a step of removing the mold and the at least one core.

12. The method for producing the stator according to claim 11,
wherein the at least one radial opening portion has a first radial opening portion located in an inner space defined by a bending portion of the coil end, and
wherein the at least one core includes a first core to form the first radial opening portion.

13. The method for producing the stator according to claim 11 or 12,
wherein the at least one radial opening portion has a second radial opening portion located between two circumferentially adjacent coil ends, and
wherein the at least one core includes a second core to form the second radial opening portion.

14. The method for producing the stator according to claim 11 or 12,
wherein in the step of filling with the resin, the resin is injected into the space while the stator core is arranged so that the axial direction coincides with a vertical direction.

15. The method for producing the stator according to claim 11 or 12,
wherein the stator further comprises:
a plurality of fingers protruding from the plurality of teeth to the one side in the radial direction and arranged at intervals in the circumferential direction; and
a plurality of stator magnets arranged alternately with the plurality of fingers in the circumferential direction, and
wherein the method further comprises:
a step of placing a mold-releasable member between two circumferentially adjacent fingers before the step of filling with the resin;
a step of removing the mold-releasable member after the step of removing the mold and the at least one core; and
a step of placing each stator magnet between the two adjacent fingers after the step of removing the mold-releasable member.

16. The method for producing the stator according to claim 11 or 12,
wherein the stator further comprises:
a plurality of fingers protruding from the plurality of teeth to the one side in the radial direction and arranged at intervals in the circumferential direction; and
a plurality of stator magnets arranged alternately with the plurality of fingers in the circumferential direction, and
wherein the method further comprises:
a step of placing each stator magnet between two circumferentially adjacent fingers;
a step of placing a plurality of auxiliary magnets so as to be arranged in the circumferential direction on the one side in the radial direction relative to the plurality of stator magnets; and
a step of removing the plurality of auxiliary magnets after the step of drying and curing the resin.

17. The method for producing the stator according to claim 16, further comprising a step of preheating the resin injected into the mold to a first temperature after the step of filling with the resin and before the step of removing the mold and the at least one core,
wherein the step of removing the mold and the at least one core is performed after the step of preheating and before the step of placing the plurality of auxiliary magnets, and
wherein in the step of drying and curing the resin, the resin is heated to a second temperature that is higher than the first temperature after the step of placing the plurality of auxiliary magnets.
